(19) Europäisches Patentamt European Patent Office Office européen des brevets

(11) **EP 4 459 433 A1**

(12) **EUROPEAN PATENT APPLICATION**

(43) Date of publication:
**06.11.2024 Bulletin 2024/45**

(21) Application number: **24172821.1**

(22) Date of filing: **26.04.2024**

(51) International Patent Classification (IPC):
**G06F 3/01** (2006.01) **G06V 40/18** (2022.01)

(52) Cooperative Patent Classification (CPC):
**G06F 3/013; G06V 40/18; G06V 40/19**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.05.2023 SE 2350538**

(71) Applicant: **Tobii AB**
**182 17 Danderyd (SE)**

(72) Inventors:
• **Sjöstrand, Jonas**
**18217 Danderyd (SE)**
• **Sjöberg, Sara**
**18217 Danderyd (SE)**
• **Ly, Adam**
**18217 Danderyd (SE)**
• **Åberg, Viktor**
**182 17 Danderyd (SE)**

(54) **IRIS DETECTION AND EYE GAZE TRACKING**

(57) A method for eye gaze tracking, the method comprising: receiving an image of an eye of a user and a corneal centre of the eye associated with the image; detecting a pupil position of the eye from the image; detecting an iris position of the eye from the image; determining the gaze axis of the eye based on the corneal centre, an iris centre of the iris position and a pupil centre of the pupil position.

## Figure 3

EP 4 459 433 A1

## Description

### Field

The present disclosure generally relates to the field of eye tracking. In particular, the present disclosure relates to methods and systems for eye gaze tracking based on iris detection and methods and systems for iris detection.

### Background

In eye tracking applications, digital images are retrieved of the eyes of a user and the digital images are analysed in order to estimate gaze direction of the user. The estimation of the gaze direction may be based on computer-based image analysis of features of the imaged eye. One known example method of eye tracking includes the use of infrared light and an image sensor. The infrared light is directed towards eye(s) of a user and the reflection of the light is captured by an image sensor.

Portable or wearable eye tracking devices have been previously described. One such eye tracking system is described in U.S. Pat. No. 9,041,787 and PCT patent publication number WO 2019/158709 (which are hereby incorporated by reference in their entirety). A wearable eye tracking device is described using illuminators and cameras for determining gaze direction.

The goal of gaze estimation is to find the gaze axis (or visual axis) of an eye. The gaze axis may be defined as the line through the fovea (a point on the retina in the back of the eye) and the cornea centre of curvature (which is the optical centre of the eye). In PCCR (pupil centre - corneal reflection) methods, the locations of the corneal centre and the pupil centre are found using illuminators, cameras and image processing. The line passing through the corneal centre and the pupil centre, the pupillary axis, does not coincide with the visual axis, but their relation (defined by a foveal offset) can be estimated by a personal calibration procedure where the subject looks at known stimulus points, for example on a display screen. After calibration, for each time frame, an estimate of the pupillary axis can be transformed into an estimate of the visual axis. In practice, however, the relation between the pupillary and visual axes is not entirely fixed for each subject but varies with time as a consequence of a phenomenon called pupil decentration: when the pupil dilates or contracts, its centre moves slightly in relation to the rest of the eye. Disclosed systems and methods may address this decentration error.

### Summary

According to a first aspect of the disclosure, there is provided **a** method for eye gaze tracking, the method comprising:

    receiving an image of an eye of a user and a corneal centre of the eye associated with the image;
    detecting a pupil position of the eye from the image;
    detecting an iris position of the eye from the image;
    determining the gaze axis of the eye based on the corneal centre, an iris centre of the iris position and a pupil centre of the pupil position.

Determining the gaze axis of the eye based on the corneal centre, the iris centre and the pupil centre may comprise:

    determining a pupillary axis of the eye based on the corneal centre and the pupil centre;
    determining the gaze axis of the eye by transforming the pupillary axis with a transformation mapping; and
    updating the transformation mapping of the pupillary axis to the gaze axis based on the iris centre and the pupil centre.

Updating the transformation mapping may comprise:

    calculating a pupil-iris offset as a difference between the pupil centre and the iris centre for the image; and
    updating the transformation mapping based on the pupil-iris offset for the image.

Updating the transformation mapping based on the pupil-iris offset for the image may comprise:
calculating the transformation mapping based on a combination of the pupil-iris offset for the image and pupil-iris offsets for one or more previous images.

The combination may comprise a low pass filtered combination of the pupil-iris offsets for the image and the one or more previous images. The combination of the pupil-iris offsets for the image and the plurality of previous images may comprise a weighted combination. Each image may comprise a weighting with more recent images having a higher weighting than less recent images.

The transformation mapping may comprise:

a pupillary-optical transformation mapping for transforming the pupillary axis to an optical axis of the eye; and
a fixed geometrical relationship between the optical axis and the gaze axis.

The method may further comprise receiving the transformation mapping. The method may comprise receiving the fixed geometrical relationship. The transformation mapping and the fixed geometrical relationship may be determined during a calibration step.

Updating the transformation mapping may comprise:

determining an optical axis of the eye based on the corneal centre and the iris centre;
calculating a pupillary-optical transformation mapping for transforming the pupillary axis to the optical axis for the image; and
updating the transformation mapping based on the pupillary-optical transformation mapping for the image and pupillary-optical transformation mappings for one or more previous images.

Updating the transformation mapping may comprise:

determining an optical axis of the eye based on the corneal centre and the iris centre;
calculating the gaze axis by transforming the optical axis with a fixed geometrical relationship for transforming the optical axis to the gaze axis;
calculating an image transformation mapping for transforming the pupillary axis to the gaze axis for the image; and
updating the transformation mapping based on the image transformation mapping for the image and image transformation mappings for one or more previous images.

The method may further comprise, during a calibration process:

receiving a plurality of calibration images of the eye of the user and a plurality of corneal centres, each associated with a corresponding calibration image, wherein each calibration image has a known gaze axis;
for each calibration image:

detecting a pupil position of the eye; and
determining a pupillary axis of the eye based on the corneal centre and a pupil centre of the pupil position;
detecting an iris position of the eye;
determining an optical axis of the eye based on an iris centre of the iris position;

determining an initial value of the transformation mapping based on the relationship between the pupillary axis and the known gaze axis for each calibration image; and
determining the fixed geometrical relationship between the optical axis and the gaze axis based on the optical axis and the known gaze axis for each calibration image.

Updating the transformation mapping may comprise updating the transformation mapping if a measurement confidence of the detected iris position exceeds an iris confidence threshold.

The method may comprise determining the iris position with an associated measurement confidence. Determining the gaze axis of the eye based on the corneal centre, the iris centre and the pupil centre may comprise:

calculating a first gaze value based on the iris centre;
calculating a second gaze value based on a pupillary axis through the corneal centre and the pupil centre and a pupil radius determined from the image; and
determining the gaze axis as a weighted combination of the first gaze value and the second gaze value, wherein a weighting of the first gaze value and the second gaze value is based on the measurement confidence.

Calculating the first gaze value may comprise:

determining the optical axis using the corneal centre and the iris centre; and
determining the gaze axis based on the optical axis and the fixed geometrical relationship between the optical axis and the gaze axis.

Calculating the first gaze value may comprise:

calculating a transformation mapping based on a combination of a pupil-iris offset for the image and pupil-iris offsets for one or more previous images; and
determining the gaze axis of the eye by transforming the pupillary axis with the transformation mapping.

Calculating the second gaze value may comprise:

calculating a pupillary-gaze transformation mapping for transforming the pupillary axis to the gaze axis for the image based on the pupil radius; and
calculating the gaze axis based on the pupillary axis and the pupillary-gaze transformation mapping.

Calculating the value of the pupillary-gaze transformation mapping based on the pupil radius may comprise calculating the pupillary-gaze transformation mapping by processing the pupil radius with a pupil-decentration model. The pupil decentration model may model the pupillary-gaze transformation mapping as a linear function dependent on the pupil radius. The method may comprise determining an initial value of the pupillary-gaze transformation mapping as part of a calibration process. The method may comprise determining an initial value of the pupil radius as part of a calibration process. The method may comprise determining an initial value of a relationship between the pupil radius and the pupillary-gaze transformation mapping as part of a calibration process.
The method may comprise determining the iris position with an associated measurement confidence, wherein determining the gaze axis of the eye based on the optical axis and the pupillary axis comprises determining the gaze axis based on the optical axis and the pupillary axis if the measurement confidence is greater than or equal to a measurement confidence threshold.
The method may comprise determining the gaze axis based on the pupillary axis if the measurement confidence is less than the measurement confidence threshold.
The method may comprise determining the measurement confidence based on one or more of:

an iris detection rate of a fixed number of previous images;
a standard deviation of an iris radius of the detected iris position of a fixed number of previous images;
a covariance matrix of a filter for mapping the iris centre to the pupil centre; and
a fitting metric based on the deviation of a plurality of iris detection points from a fitted iris outline ellipse.

The method may comprise determining the measurement confidence based on a deviation of each of the plurality of iris detection points from a fitted iris outline ellipse. The deviation of each iris detection point may be weighted based on an angle between: a vector from the centre of the iris outline ellipse to iris detection point; and a horizontal axis of the eye.
The method may further comprise, during a calibration process:

receiving a plurality of calibration images of the eye of the user;
for each calibration image, detecting an iris position of the eye;
calculating an iris detection rate based on whether iris detection was successful for each calibration image;
setting a gaze determination algorithm to a pupil-only based gaze determination process if the iris detection rate is less than a detection rate threshold; and
setting a gaze determination algorithm to a pupil- and iris-based gaze determination process if the iris detection rate is greater than or equal to the detection rate threshold.

Detecting the iris position may comprise:

detecting a plurality of iris detection points of the iris in the image; and
fitting an iris outline ellipse using the plurality of iris detection points.

The method may comprise:

estimating an angle between:

a camera-eye vector spanning from a camera which captured the image to the pupil centre; and

the pupillary axis or the optical axis;

setting an ellipse ratio based on the angle; and
fitting the iris outline ellipse using the ellipse ratio.

Setting the ellipse ratio based on the angle may comprise:

determining a conic section of a cone corresponding to a plane having a surface normal that forms the angle with an axis of the cone; and
determining the ellipse ratio as the ellipse ratio of the conic section.

The method may further comprise:
calculating a detection confidence of the iris position based on a deviation of each of the plurality of iris detection points from the fitted iris outline ellipse, wherein the deviation of each iris detection point is weighted based on an angle between:

a vector from the centre of the iris outline ellipse to iris detection point; and
a horizontal axis of the eye.

According to a second aspect of the present disclosure there is provided a method of calibrating an eye tracking system, the method comprising the steps of:

receiving a plurality of calibration images of the eye of the user;
for each calibration image, detecting an iris position of the eye with an associated detection confidence;
calculating an iris detection rate based on the associated detection confidence for the calibration images;
setting a gaze determination algorithm to a pupil-only based gaze determination process if the iris detection rate is less than a detection rate threshold; and
setting a gaze determination algorithm to a pupil- and iris-based gaze determination process if the iris detection rate is greater than or equal to the detection rate threshold.

According to a third aspect of the present disclosure there is provided a method of iris detection, the method comprising:

receiving an image of an eye of a user;
detecting a plurality of iris detection points of the iris in the image;
fitting an iris outline ellipse using the plurality of iris detection points;
calculating a detection confidence by combining a deviation of each of the plurality of iris detection points from the fitted iris outline ellipse, wherein each deviation is weighted with a weighting based on an angle between:

a vector from the centre of the iris outline ellipse to the iris detection point; and
a horizontal axis of the eye.

The weightings of each iris point may comprise:

a weighting of 1 if the angle is less than an angular threshold;
a weighting of 0 if the angle is greater than the angular threshold.

The weightings may be inversely proportional to a magnitude of the angle.
The weightings may comprise personalised weightings for the user. The method may further comprise determining the personalised weightings during a user calibration process.
According to a fourth aspect of the present disclosure there is provided an eye tracking system comprising one or more processors configured to perform any of the methods disclosed herein.
According to a fifth aspect of the present disclosure there is provided a computer readable medium comprising instructions which, when executed by one or more processors, cause the one or more processors to perform any of the methods disclosed herein.
According to a fifth aspect of the present disclosure there is provided a head mounted display comprising any of the eye tracking systems disclosed herein or any computer readable medium disclosed herein.

## Brief Description of the Drawings

One or more embodiments will now be described by way of example only with reference to the accompanying drawings in which:

Figure 1 shows an example eye tracking system in a head-mounted device;
Figure 2 shows a simplified example of an image of a pair of eyes, captured by an eye tracking system;
Figure 3 illustrates a cross-section of an example eye;
Figure 4 illustrates an example method for eye gaze tracking according to an embodiment of the present disclosure;
Figure 5 illustrates an example calibration process for a foveal offset transformation mapping according to an embodiment of the present disclosure;
Figure 6 schematically illustrates moving average updating of a pupillary-optical transformation mapping according to an embodiment of the present disclosure;
Figure 7 illustrates a schematic flow diagram of an example implementation of an eye gaze tracking method according to an embodiment of the present disclosure;
Figure 8 illustrates an example method of calibrating an eye tracking system according to an embodiment of the present disclosure;
Figure 9 schematically illustrates a first example method of iris detection according to an embodiment of the present disclosure;
Figure 10 illustrates eyelid occlusion of an iris;
Figure 11 illustrates a second example iris detection method according to an embodiment of the present disclosure; and
Figure 12 schematically illustrates a binary weighting approach for the method of Figure 11.

## Detailed Description

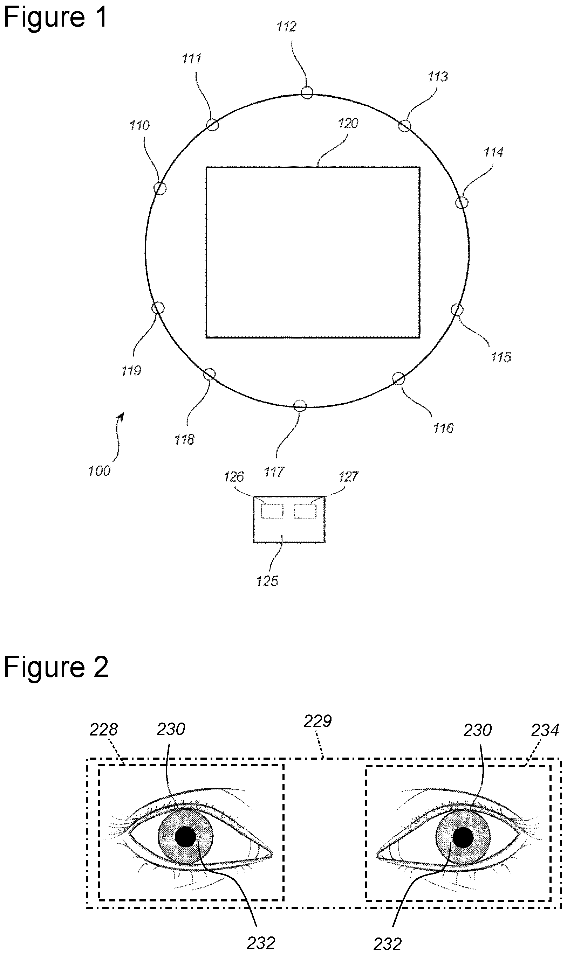

Figure 1 shows a simplified view of an eye tracking system 100 (which may also be referred to as a gaze tracking system) in a head-mounted device in the form of a virtual or augmented reality (VR or AR) device or VR or AR glasses or anything related, such as extended reality (XR) or mixed reality (MR) headsets. The system 100 comprises an image sensor 120 (e.g., a camera) for capturing images of the eyes of the user. The system may optionally include one or more illuminators 110-119 (also referred to herein as light sources) for illuminating the eyes of a user, which may for example be light emitting diodes (LEDs) emitting light in the infrared frequency band, or in the near infrared frequency band and which may be physically arranged in a variety of configurations. The image sensor 120 may for example be an image sensor of any type, such as a complementary metal oxide semiconductor (CMOS) image sensor or a charged coupled device (CCD) image sensor. The image sensor may consist of an integrated circuit containing an array of pixel sensors, each pixel containing a photodetector and an active amplifier. The image sensor may be capable of converting light into digital signals. In one or more examples, it could be an infrared image sensor or IR image sensor, an RGB sensor, an RGBW sensor or an RGB or RGBW sensor with IR filter.

The eye tracking system 100 may comprise circuitry or one or more controllers 125, for example including a receiver 126 and processing circuitry 127, for receiving and processing the images captured by the image sensor 120. The circuitry 125 may for example be connected to the image sensor 120 and the optional one or more illuminators 110-119 via a wired or a wireless connection and be co-located with the image sensor 120 and the one or more illuminators 110-119 or located at a distance, e.g., in a different device. In another example, the circuitry 125 may be provided in one or more stacked layers below the light sensitive surface of the light sensor 120.

The eye tracking system 100 may include a display (not shown) for presenting information and/or visual stimuli to the user. The display may comprise a VR display which presents imagery and substantially blocks the user's view of the real-world or an AR display which presents imagery that is to be perceived as overlaid over the user's view of the real-world.

The location of the image sensor 120 for one eye in such a system 100 is generally away from the line of sight for the user in order not to obscure the display for that eye. This configuration may be, for example, enabled by means of so-called hot mirrors which reflect a portion of the light and allows the rest of the light to pass, e.g., infrared light is reflected, and visible light is allowed to pass.

While in the above example the images of the user's eye are captured by a head-mounted image sensor 120, in other examples the images may be captured by an image sensor that is not head-mounted. Such a non-head-mounted system may be referred to as a remote system.

In an eye tracking system, a gaze signal can be computed for each eye of the user (left and right). The quality of these gaze signals can be reduced by disturbances in the input images (such as image noise) and by incorrect algorithm behaviour (such as incorrect predictions). A goal of the eye tracking system is to deliver a gaze signal that is as good as possible, both in terms of accuracy (bias error) and precision (variance error). For many applications it can be sufficient to deliver only one gaze signal per time instance, rather than both the gaze of the left and right eyes individually. Further, the combined gaze signal can be provided in combination with the left and right signals. Such a gaze signal can be referred to as a combined gaze signal.

Figure 2 shows a simplified example of an image 229 of a pair of eyes, captured by an eye tracking system such as the system of Figure 1. The image 229 can be considered as including a right-eye-image 228, of a person's right eye, and a left-eye-image 234, of the person's left eye. In this example the right-eye-image 228 and the left-eye-image 234 are both parts of a larger image of both of the person's eyes. In other examples, separate image sensors may be used to acquire the right-eye-image 228 and the left-eye-image 234. In other examples, multiple image sensors may be used to acquire images capturing both eyes.

The system may employ image processing (such as digital image processing) for extracting features in the image. The system may for example identify a position of the pupil 230 in the one or more images captured by the image sensor. The system may determine the position of the pupil 230 using a pupil detection process. The system may also identify corneal reflections (also known as glints) 232 located in close proximity to the pupil 230. The system may estimate a corneal centre and / or a distance to the user's eye based on the corneal reflections 232. For example, the system may match each of the individual corneal reflections 232 for each eye with a corresponding illuminator and determine the corneal centre of each eye and / or the distance to the user's eye based on the matching. To a first approximation, the eye tracking system may approximate the gaze axis of the eye of the user based on the pupillary axis - a vector passing through a centre of the pupil 230 and the corneal centre. The direction of gaze corresponds to the axis from the fovea of the eye through the corneal centre. The angle between the pupillary axis and the gaze direction is the *foveal offset,* which typically varies from user to user and is in the range of a few degrees. The eye tracking system may perform a calibration procedure, instructing the user to gaze in a series of predetermined directions (e.g., via instructions on a screen), to determine the foveal offset.

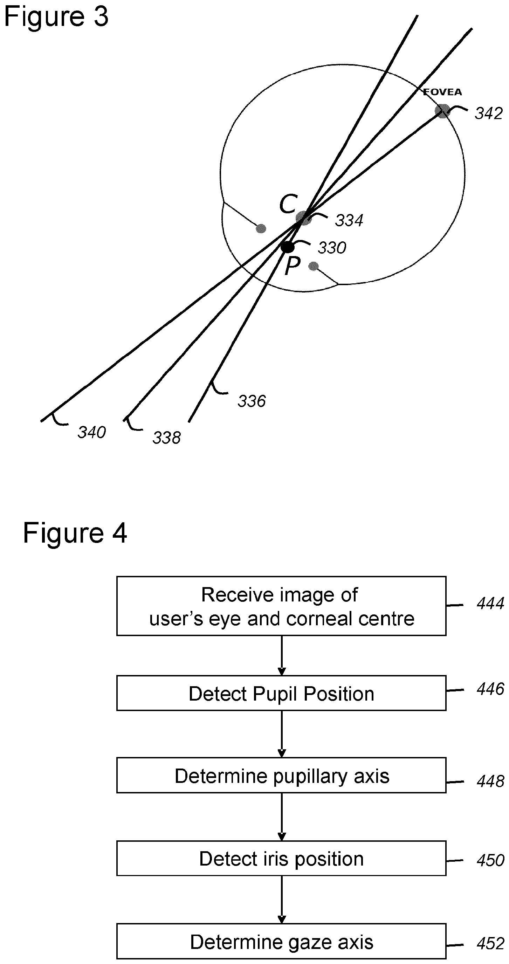

Figure 3 illustrates a cross-section of an example eye. The gaze axis (or visual axis) 340 of an eye corresponds to the line through the fovea 342 (a point on the retina in the back of the eye) and the cornea centre of curvature, C, 334 (which is the optical centre of the eye). In PCCR (pupil centre - corneal reflection) the locations of the corneal centre, C, 334 and the pupil centre, P, 330, are found using illuminators, cameras and image processing. The line passing through the corneal centre, C, 334 and the pupil centre, P, 330 is the pupillary axis 336. The pupillary axis 336 does not coincide with the visual axis 340, but their relation can be estimated by a personal calibration procedure where the subject looks at known stimulus points, for example on a display screen. After calibration, for each time frame, an estimate of the pupillary axis 336 can be transformed into an estimate of the gaze axis 340.

In practice, however, the relation between the pupillary axis 336 and the gaze axis 340 (foveal offset) is not entirely fixed for each subject but varies with time as a consequence of a phenomenon called pupil decentration: when the pupil dilates or contracts, its centre moves slightly in relation to the rest of the eye.

However, the gaze axis 340 and the optical axis 338 which corresponds to a line through the corneal centre, C, 334 and a centre of the iris, have a fixed geometrical relationship for a user (fixed here refers to a fixed geometrical relationship on the timescales relevant to eye tracking, however the relationship may vary over much longer timescales as the user ages). An eye tracking system can detect the optical axis 338 by determining an iris centre from image processing. However, iris detection is considerably more difficult than pupil detection because the contrast is higher at the pupil edge than at the iris edge and the iris is often occluded by eyelids. Therefore, PCCR has typically been used for gaze determination in eye tracking systems.

As described herein, the disclosed methods and systems may include determining positions of eye features, such as pupil position, iris position, corneal centre, gaze axis, pupillary axis and optical axis, in a three-dimensional (3D) coordinate system. The 3D coordinate system may correspond to a coordinate system of a camera that captures the image or of the eye tracking system more generally. The 3D positions of some of the eye features, such as the corneal centre, may be determined using back-projection from two or more images of the same eye captured at substantially the same time point. The two more images may be captured by separate cameras with known positions in the 3D coordinate system or may be captured by the same camera but with different illuminators lit and reflected in the cornea. In virtual reality systems, one image of the eye with several lit illuminators can suffice for determining the corneal centre. Such techniques are known in the art and not described further here.

Figure 4 illustrates an example method for eye gaze tracking according to an embodiment of the present disclosure.

A first step 444 of the method comprises receiving an image of an eye of the user and a corneal centre of the eye (in a 3D coordinate system) associated with the image. As noted above the corneal centre may be determined from two images of the eye captured at substantially the same time. Such images can include one or more corneal reflections from a plurality of illuminators and the corneal centre can be determined using back projection to determine the 3D coordinate of each corneal reflection and subsequently determine a centre of the spherical surface upon which the reflections lie. This is a known PCCR technique and is not described further here.

A second step 446 comprises detecting a pupil position of the eye from the image. The pupil position may be detected using known PCCR techniques, such as a pupil detection process or other image processing techniques.

An optional third step 448 comprises determining a pupillary axis based on the corneal centre, $C$, and a pupil centre, $P$, of the pupil position. The pupillary axis may be determined as a vector through the corneal centre, $C$, and the pupil centre, $P$.

A fourth step 450 comprises detecting an iris position of the eye from the image. The iris position may be detected using known image processing techniques for iris detection.

A fifth step 452 comprises determining a gaze axis based on the corneal centre, an iris centre of the iris position and a pupil centre of the pupil position.

By determining the gaze axis based on both the pupil centre and the iris centre, the method can advantageously combine the low error of pupillary axis determination with the time-independent fixed relationship between the optical axis (defined by the iris centre) and the gaze axis.

As explained below, the fifth step 452 may be performed in a number of ways. In a first set of examples, the foveal offset may be determined using the iris centre and pupil centre and may be determined or updated on a slow timescale (e.g., seconds or minutes) similar to the timescale of foveal offset variation. In this way, errors in the iris detection can be averaged over a number of images. In a second set of examples, a contribution of the iris detection to the calculation of the gaze axis may be based on a measurement confidence of the iris detection. The gaze axis calculation may be biased towards a standard pupil-only based approach if the iris measurement confidence is low. In a third set of examples, a combination of the technique from the first and second set of examples may be employed. For example, the foveal offset determination may only be updated if the iris detection measurement confidence exceeds a threshold value.

In a first set of examples, the fifth step 452, updates a transformation mapping for transforming the pupillary axis, $P_t$, to the gaze axis, $V_t$, (subscript t indicates a time dependence) using the pupil centre and the iris centre.

The relationship between the axes can be written:

$$V_t = A(O_t) = A\big(B_t(P_t)\big) \qquad (1)$$

where $B_t$ is an estimate of a pupillary-optical transformation mapping from the pupillary axis, $P_t$, to the optical axis, $O_t$, (i.e., $O_t = B_t(P_t)$) and $A \cdot B_t$ defines the transformation mapping (foveal offset) for transforming the pupillary axis, $P_t$, to the gaze axis, $V_t$. Here, the expression $A \cdot B_t$ is used as shorthand to represent the mathematical mapping $A(B_t(\boldsymbol{x}))$ acting on vector $\boldsymbol{x}$.

The value of the fixed geometrical relationship, $A$, and an initial value of the transformation mapping (foveal offset), $A \cdot B_t$, (and/or pupillary-optical transformation mapping $B_t$) can be determined during a personal calibration in which the user is instructed to gaze at stimulus points at a known position on a display screen.

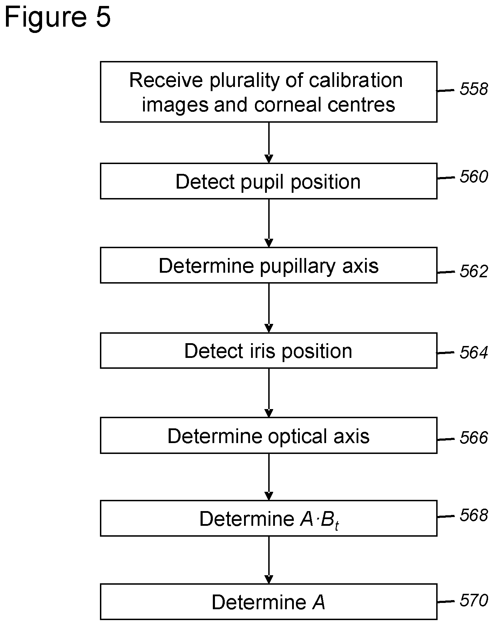

Figure 5 illustrates an example calibration process for determining the geometrical relationship, $A$, and an initial value of the transformation mapping (foveal offset), $A \cdot B_t$, according to an embodiment of the present disclosure.

A first step 558 comprises receiving a plurality of calibration images of the eye of the user. Each calibration image may correspond to a user looking at a stimulus point displayed at a known position on a display screen. As the position of the stimulus point (and screen) is known in relation to the user's eye, each calibration image can be considered to have a known gaze axis. The position between the screen and the user's eye can be pre-determined or determined using known techniques (for example, the relationship between the user's eye and camera can be determined from the image and the geometrical relationship between the camera and the screen may be fixed). The first step also includes receiving a corneal centre for each calibration image. The corneal centre for each calibration image may be determined in the same way as described above.

A second step 560 comprises detecting a pupil position of the eye for each calibration image. The pupil position may be detected in the same way as step 446 of Figure 4.

A third step 562 comprises determining a pupillary axis for each calibration image based on the corresponding corneal centre, $C$, and a pupil centre, $P$, of the pupil position.

A fourth step 564 comprises detecting an iris position of the eye for each calibration image. The iris position may be detected in the same way as step 450 of Figure 4.

A fifth step 566 comprises determining an optical axis, $O_t$, of the eye for each calibration image based on a corresponding iris centre of the iris position. In some examples, determining the optical axis, $O_t$, may comprise determining the optical axis, $O_t$, as the vector through the iris centre and the corneal centre, $C$. In some examples, determining the optical axis, $O_t$, may comprise: determining a pupil-iris offset between the pupil centre and the iris centre; and determining the optical axis, $O_t$, by transforming the pupillary axis, $P_t$, using the pupil-iris offset. The pupil-iris offset may define the pupillary-optical axis transformation mapping, $B_t$, for example, as a rotation of the pupillary axis, $P_t$, about the corneal centre, $C$.

A sixth step 568 comprises determining an initial value of the transformation mapping, $A \cdot B_t$, based on the geometrical relationship between the pupillary axis and the known gaze axis for each calibration image. The transformation mapping, $A \cdot B_t$, may be determined by averaging the geometrical relationships over the calibration images.

An seventh step 570 comprises determining the fixed geometrical relationship, A, between the optical axis, $O_t$, and the gaze axis, $V_t$, based on the optical axis, $O_t$, and the known gaze axis for each calibration image. The fixed geometrical relationship, A, may be determined by averaging over all the calibration images.

In some examples, the sixth step 568 may follow the seventh step 570. In some examples, the sixth step 568 may alternatively comprise determining an initial value of the pupillary-optical transformation mapping, $B_t$. For example, the pupillary-optical transformation mapping, $B_t$, may be determined from the pupil-iris offset or based on the geometrical relationship between the pupillary axis, $P_t$, and the optical axis, $O_t$, for each calibration image. In some examples, the pupillary-optical transformation mapping, $B_t$, may be determined based on the geometrical relationship between the pupillary axis and a calculated optical axis for each calibration image, wherein the calculated optical axis is determined by transforming the known gaze axis using the fixed geometrical relationship, $A$, for each calibration image (determined in the seventh step 570).

Following personal calibration and during an eye tracking application, the pupillary axis, $P_t$, and the optical axis, $O_t$, can be derived from pupil and iris detections in each eye tracking image. As the iris is hard to detect, estimation of the optical axis, $O_t$, can be noisy. As the relationship between the pupil and iris (or visual axis) typically varies slowly, the pupillary-optical transformation mapping, $B_T$, can be estimated using an average (e.g., a weighted average) over a plurality of images captured during the latest seconds, or even minutes, of tracking (i.e., over a plurality of previous eye tracking images). Here, the subscript uppercase T indicates an averaging over time period T relating to the plurality of images. In this way, the estimated gaze axis, $V_t$, will take pupil decentration into account without adding the noise of an unfiltered iris detector.

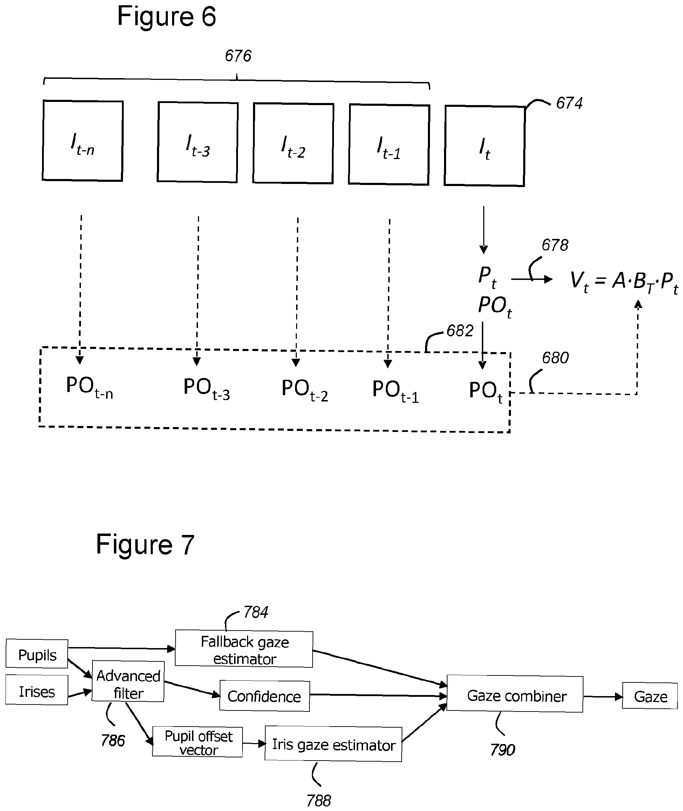

Figure 6 schematically illustrates the above-described moving average updating of the pupillary-optical transformation mapping, $B_T$, according to an embodiment of the present disclosure.

A current image, $I_t$, 674 is illustrated together with a plurality of previous images $I_{t-n}...I_{t-1}$, 676.

An example method comprises, determining 678, the gaze axis, $V_t$, by transforming the pupillary axis, $P_t$, of the current image 674 using the transformation mapping, $A \cdot B_T$. The method also comprises updating 680 the transformation mapping, $A \cdot B_T$, (e.g.., by updating the pupillary-optical mapping $B_T$) based on iris centre and the pupil centre. More specifically, the method comprises calculating a pupil-iris offset, $PO_t$, for the current image 674 as a difference between the pupil centre and the iris centre, and updating the transformation mapping, $A \cdot B_T$ based on the pupil-iris offset, $PO_t$, for the image.

In this example, updating 680 the transformation mapping comprises: calculating a time averaged pupil-iris offset 682 as a combination of the pupil-iris offset, $PO_t$, for the current image 674 and pupil-iris offsets, $PO_{t-1},...PO_{t-n}$, calculated for the previous images 676; and determining the transformation mapping, $A \cdot B_T$, based on the time-averaged pupil-iris offset 682. The method may derive the transformation mapping, $A \cdot B_T$, from the time-averaged pupil-iris offset. For example, the method may comprise determining a rotation of the pupillary axis, $P_t$, about the corneal centre C, that would translate the pupil centre, P, by the time-averaged pupil-iris offset. The combination of the pupil iris offsets, $PO_t$, $PO_{t-1},...PO_{t-n}$, may comprise an average or a weighted average with more recent images having a higher weighting than less recent images. The combination may comprise a time filter, such as a Kalman filter, to track the time-averaged iris-pupil offset. The combination of the pupil iris offsets provides low-pass filtering of the pupil-iris offset signal and can advantageously reduce noise arising from any inaccuracy in the iris position detection. In some examples, the combination may use a fixed number of previous images. In some examples, the combination may include a weighted combination of all previously captured images.

Updating the transformation mapping based on the iris centre and the pupil centre may be performed in other ways than the pupil-iris offset approach described above. For example, the method may comprise calculating the optical axis for the current image 672 as the vector through the corneal centre and the iris centre. Updating the transformation mapping, $A \cdot B_T$, may then comprise: (i) calculating a pupillary-optical transformation mapping, $B_t$, for transforming the pupillary axis, $P_t$, to the optical axis, $O_t$, for the current image 674; and (ii) updating 680 the transformation mapping, $A \cdot B_T$, based on the pupillary-optical transformation mapping, $B_t$, for the current image 674. Updating the transformation mapping, $A \cdot B_T$, based on the pupillary-optical transformation mapping, $B_t$, for the current image 674 can comprise calculating the transformation mapping, $A \cdot B_T$, based on a combination (e.g. average, weighted average, filtering) of pupillary-optical transformation mappings, $B_t$, $B_{t-1},...B_{t-n}$, calculated for the image 674 and a plurality of previous images 676.

As a further example, updating the transformation mapping, $A \cdot B_T$, may comprise: (i) calculating the gaze axis, $V_t$, for the current image 674 by transforming the optical axis, $O_t$, with the fixed geometrical relationship, $A$; (ii) calculating an image transformation mapping, $A \cdot B_T$, for transforming the pupillary axis, $P_t$, to the gaze axis, $V_t$, for the current image 674; and (iii) updating the transformation mapping, $A \cdot B_T$, based on the image transformation mapping, $A \cdot B_T$, for the current image 674. The transformation mapping, $A \cdot B_T$, may then be calculated based on a combination of image trans-

formation mappings ($A \cdot B_t$, $A \cdot B_{t-1}$...$A \cdot B_{t-n}$) for the image 674 and the plurality of previous images 676.

In some examples, the method may comprise only updating the transformation mapping, $A \cdot B_T$, if a measurement confidence of the iris detection process for the current image 674 exceeds a first measurement confidence threshold. Determining the measurement confidence of the iris detection is described further below.

It has been shown that the accuracy of gaze estimation can improve significantly if iris detections and the optical axis are used as an input to an eye model for estimating gaze (because the personal calibration parameters are independent of pupil dilations and contractions). However, it has also been shown that due to the difficulty of accurately detecting the iris in eye images for some subjects, there are cases where using iris detections as input to the eye model to estimate gaze will degrade the accuracy of the eye gaze tracking. The time-averaging of the pupil-iris offset and the pupillary-optical transformation mapping, $B_T$, over previous images and/or the measurement confidence check described above can address this iris detection inaccuracy for the first set of examples.

However, in scenarios where the iris cannot be reliably detected it may be better to use a pupil-only based fallback eye model (e.g., PCCR) that does not include the iris. Such eye models can use personal calibration parameters (e.g., the foveal offset or the pupillary-optical transformation mapping, $B_t$,) that are modelled as linear functions dependent on the pupil radius, in order to try and account for the pupil movements that happen when the pupil dilates or contracts. In scenarios with good iris detection, an iris eye model that does include the iris can be used. Such models do not require the same personal calibration parameters as the first model, since using the iris in the eye model compensates for the effects of pupil movements in a better way than the linear calibration parameters.

The method of gaze estimation where the iris is not used may be referred to herein as the *fallback method* (or pupillary model) and the method of gaze estimation where the iris is used in the eye model may be referred to as the *iris method* (or iris model).

The fallback method may comprise a PCCR pupil-only technique comprising: calculating a value of the transformation mapping for transforming the pupillary axis to the gaze axis based on the pupil radius; and calculating the gaze axis based on the pupillary axis and the transformation mapping. Calculating the value of the transformation mapping based on the pupil radius may comprise calculating the transformation mapping by processing the pupil radius with a pupil-decentration model. The pupil-decentration model may model the transformation mapping as a linear function dependent on the pupil radius. The pupil can become decentred relative to the iris as the pupil dilates. The pupil-decentration model can estimate the amount of decentration as a linear function of the pupil radius. In this way, the model can estimate a pupil-iris offset without actually detecting an iris. The model can derive the transformation mapping from the pupil-iris offset. The model may make use of initial values of the pupil radius, the transformation mapping and/or the relationship therebetween, determined during a calibration routine, such as that described in relation to Figure 5 above.

The iris method may comprise any iris-based gaze detection method described herein. For example, the method may comprise the approach of updating the time-averaged pupillary-optical transformation mapping, $B_T$, and calculating the gaze axis, described above in relation to the first set of examples and Figure 6. The iris method may alternatively comprise a single image based approach. For example, the method may comprise: determining the optical axis as the vector through the corneal centre and the iris centre; and determining the gaze axis based on the optical axis and the fixed geometrical relationship, $A$, between the optical axis and the gaze axis (determined during calibration).

There are subjects for which iris detection is almost always going to be difficult. However, there are also subjects for which iris detection quality will vary based on the subject's position, their level of fatigue, or other possible factors. As described below, for such subjects, the present disclosure provides systems and methods that can detect when iris detection quality is dropping and change the gaze estimation method to be biased towards the fallback method rather than the iris method.

Returning to Figure 4, in a second set of examples, the fourth step 450 may comprise determining the iris position with an associated measurement confidence and the fifth step 452 may comprise determining the gaze axis based on a weighted combination of: (i) a first gaze value (or iris gaze value) calculated using the iris method; and (ii) a second gaze value (or fallback gaze value) calculated using the fallback method.

The weighting of the first gaze value and the second gaze value may be based on the measurement confidence.

In some examples, the measurement confidence may be a scalar value between 0 and 1, with 0 representing 0% confidence and 1 representing 100% confidence in the iris detection. The gaze axis may then be determined according to:

$$gaze = confidence \cdot iris\ gaze\ value + (1 - confidence) \cdot fallback\ gaze\ value \qquad (2)$$

The measurement confidence may be determined based on one or more of:

- **A recent iris detection rate:** The method may comprise tracking a recent iris detection rate. The iris detection rate may define the number of images in a sample of images for which an iris was detected. The method may save all iris detections from the last x seconds or n images, and use the iris detection rate as the measurement confidence.

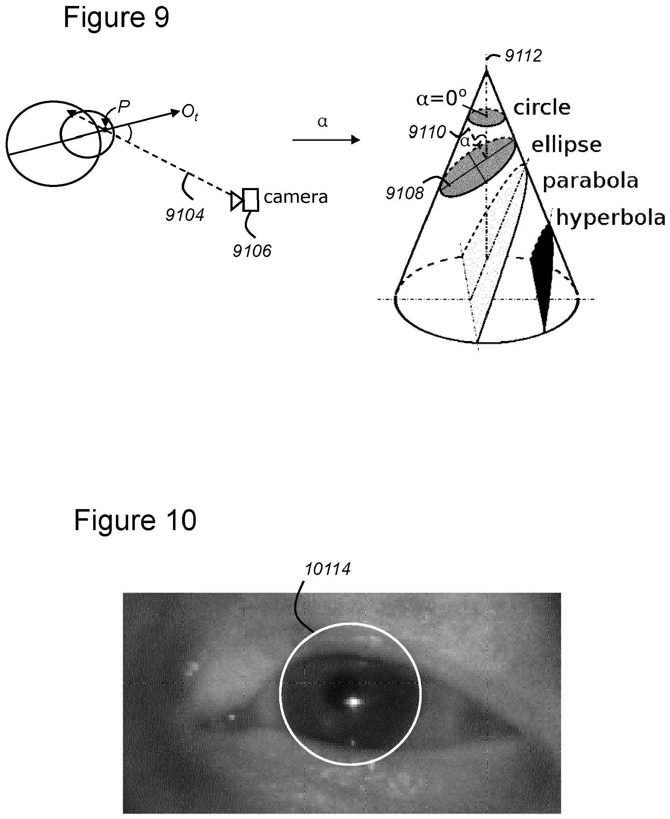

- **Standard deviation of iris radius:** The iris radius does not vary over time. The method may track a standard deviation of the iris radius for a fixed number of previous images. The measurement confidence may be determined based on an inverse of the standard deviation.
- **Covariance matrix from iris-pupil offset filter:** As described above, the iris method for estimating gaze may include a filter (e.g., a Kalman filter or simple low pass filter) for filtering an estimate of the pupillary-optical transformation, $B_t$, or the pupil to iris offset based on a plurality of images. This filter can receive iris detections and pupil detections as inputs. If the filter is a Kalman filter, or similar, a metric on the confidence of the pupil-iris offset signal is easily available through the covariance matrix which can thus be used as the measurement confidence.
- **A fitting metric:** Some iris methods may fit an ellipse to a plurality of detected iris points. The fitting metric may be based on the deviation of the plurality of iris detection points from the fitted iris outline ellipse. The fitting metric may be used as the measurement confidence. This example is expanded on further below in relation to Figure 9.

Figure 7 illustrates a schematic flow diagram of how example methods of the second set of examples may be logically implemented.

In this example, a fallback gaze estimator 784 may perform the fallback method (e.g., PCCR) by receiving a pupil centre and a corneal centre and outputting the fallback gaze value.

An advanced filter 786 can receive the detected pupil and iris from the image and determine the measurement confidence, for example using any of the approaches described above. In this example, the advanced filter also outputs the pupil-iris offset (labelled pupil offset vector) defining the vector between the pupil centre and the iris centre.

In this example, an iris gaze estimator 788 performs the time-averaged iris method described above in relation to the first set of examples. The iris-gaze estimator 788 can: receive the pupil-iris offset, update the time-averaged pupil-iris offset using the pupil-iris offset, update the transformation mapping (specifically the pupillary-optical transformation mapping, $B_t$) using the time-averaged pupil-iris offset and calculate the iris gaze value by transforming the pupillary axis with the updated transformation mapping. The iris gaze estimator 788 can output the iris gaze value.

A gaze combiner 790 may receive the measurement confidence, the fallback gaze value and the iris gaze value and determine the weighted gaze, for example according to equation 2 above.

For the iris model, the fixed geometrical relationship and/or an initial value of the pupillary-optical transformation mapping, $B_t$, and/or the foveal offset, $A \cdot B_T$, may be determined as part of a calibration process, such as that described in relation to Figure 5. An initial value of the pupil-iris offset vector may also be determined during the calibration process. For the pupillary model, initial values of the pupil radius, the transformation mapping between the pupillary axis and the gaze axis, and/or the relationship therebetween, may also be determined during a calibration routine, such as that described in relation to Figure 5 above.

The weighting of the first and second gaze value may be set such that gaze is only calculated using the pupillary model if the measurement confidence is less than a second measurement confidence threshold. In other words, the seventh step 456 of Figure 4 may comprise: (i) determining the gaze axis, $V_t$, based on the optical axis, $O_t$, and the pupillary axis, $P_t$, (i.e., using the iris model and pupillary model) if the measurement confidence is greater than or equal to a second measurement confidence threshold; and (ii) determining the gaze axis, $V_t$, based on only the pupillary axis, $P_t$, (i.e., using the pupillary model) if the measurement confidence is less than the second measurement confidence threshold. In such examples a simple binary decision is made as to whether to use iris detections in the determination of gaze. If the measurement confidence is greater than the second measurement confidence threshold then the method may comprise determining the gaze axis based on a weighted combination of the iris gaze value and the fallback gaze value, as described above. The weightings may be written as:

$$gaze = confidence \cdot iris\ gaze\ value + (1 - confidence) \cdot fallback\ gaze\ value \quad if\ confidence > threshold$$

$$gaze = fallback\ gaze\ value \qquad\qquad\qquad\qquad\qquad if\ confidence \leq threshold \quad (3)$$

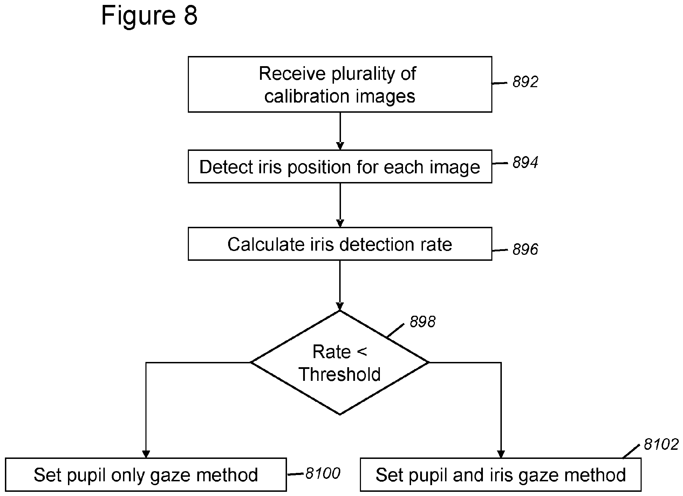

The concept of iris measurement confidence may be extended to the calibration process to determine the appropriate gaze detection method. Figure 8 illustrates an example method of calibrating an eye tracking system according to an embodiment of the present disclosure.

A first step 892 comprises receiving a plurality of calibration images of the eye of the user. The plurality of calibration images may comprise a user gazing at a corresponding plurality of stimulus points as described above in relation to Figure 5.

A second step 894 comprises, for each calibration image, attempting detection of an iris position of the eye. The iris position may be determined in the same way as described above in relation to Figure 5.

A third step 896 comprises calculating an iris detection rate based on whether iris detection was successful for the plurality of calibration images.

A decision step 898 comprises determining if the iris detection rate is less than a detection rate threshold.

If the iris detection rate is less than the detection rate threshold, the method proceeds to a fourth step 8100 comprising setting a gaze determination algorithm to a pupil-only based gaze determination process (pupillary model / fallback method) if the iris detection rate is less than a detection rate threshold.

If the iris detection rate is greater than or equal to the detection rate threshold, the method proceeds to a fifth step 8102 comprising setting a gaze determination algorithm to a pupil- and iris-based gaze determination process (e.g., the confidence weighted iris method and fallback method) if the iris detection rate is greater than or equal to the detection rate threshold.

In summary, the method of Figure 8 collects a set of gaze samples where the subject is looking at stimulus points with a known gaze axis. For this set of gaze samples the iris detection rate can be computed, which defines what share of the gaze samples have reliable iris detection. The iris detection rate may be a scalar number between 0 and 1, and the closer to 1 it is the better iris detection worked during calibration. The iris detection rate is compared against a detection rate threshold, and if the iris detection rate is lower than the threshold, gaze detection for the end application will always use the fallback method. If the detection rate is greater than or equal to the threshold, gaze detection for the end application may be performed using the weighted combination of the iris method and the fallback method, as described above. In this way, iris detection is not used for the end eye gaze tracking application if iris detection is deemed unreliable during the calibration process.

For any of the disclosed methods and systems iris detection may comprise: detecting a plurality of iris detection points of the iris in the image; and fitting an iris outline ellipse using the plurality of iris detection points.

Modelling the iris as a mathematical function can be more challenging than modelling the pupil. A robust iris-based model with the precision needed for robust eye-tracking can be difficult to achieve due to a poorer contrast than pupils and occlusion from the eyelids for irises. However, as described above, iris-based gaze tracking can provide accurate gaze estimates that do not suffer from dilations and contractions to the same degree as pupils which can be difficult to account for in PCCR. Therefore, the present disclosure considers improvements in iris detection that can be implemented with any of the example methods and systems disclosed herein.

Estimating the iris as an ellipse, compared to a circle, increases the degree of fitting freedom. However, the resulting increase in the variance of the fitting model can make it prone to overfitting to noise error. Even if the iris is approximated as a circle, the iris will still appear elliptical in images when the eye is not viewed perpendicular to the camera.

A first example method of iris detection may comprise constraining the half-axes of a fitting ellipse based on an angle of the pupillary axis or optical axis with an image plane of a camera which captures the image. The pupillary axis can be easier to estimate and have a lower error since the pupil is smaller and may appear more circular in the image than the iris due to refraction at the cornea surface. Furthermore, with greater rotation of the optical axis away from the camera, the pupillary axis error will grow due to complex refraction through the cornea. Eventually, the further part of the limbus will no longer be visible.

In some examples the first example method of iris detection for an image may comprise: (i) estimating an angle between: (a) a camera-eye vector spanning from a position of the camera which captured the image and a pupil centre of the image; and (b) a pupillary or optical axis of the eye; (ii) setting an ellipse ratio based on the angle; (iii) detecting a plurality of iris detection points of the iris in the image; and (iv) fitting an iris outline ellipse to the plurality of iris detection points based on the ellipse ratio.

Figure 9 schematically illustrates the first example method. The camera eye vector 9104 spans from a position of the camera 9106 to the pupil centre, P. The camera-eye vector can be determined using standard image processing techniques such as back-projection. The camera eye vector 9104 forms an angle, $\alpha$, with the optical axis, $Ot$ (or pupillary axis). The angle, $\alpha$, is used to set the ellipse ratio. In this example, setting the ellipse ratio based on the angle, $\alpha$, comprises determining a conic section corresponding to a plane 9108 having a surface normal 9110 that forms the angle, $\alpha$, with an axis 9112 of the cone. The conic section is an ellipse from which the ellipse ratio can be determined based on the ratio of the ellipse axes. The estimated conic section is perpendicular to the optical axis (or pupillary axis) thus yielding the ratio between the half-axes.

In some examples, the ellipse ratio may be provided as an interval (for example based on an estimated uncertainty in the pupillary/optical axis or in the angle, $\alpha$). The interval can be used to constrain the possible search space of half-axes when fitting the iris outline ellipse to the plurality of iris detection points. In other examples, the method may comprise fitting an iris outline ellipse having the ellipse ratio to the plurality of iris detection points.

In some examples, iris detection may be switched off when the angle, $\alpha$, is greater than an angular detection threshold.

The first example method of iris detection may be used with any of the eye gaze tracking methods disclosed herein or may be performed independently for other applications. The pupil centre, pupillary axis and/or optical axis may be determined as described above in earlier examples. The first example method of iris detection may also be combined with the second example method of iris detection described below.

As noted above, it can be useful to reject badly estimated irises from use in the eye tracking system. Small errors in the iris detection can have a substantial impact on the overall predicted gaze. As described above, an iris measurement confidence (or confidence metric) of the predicted iris enables control of whether to make use of a detected iris. A second example of iris detection can provide a fitting metric for use as the iris measurement confidence.

Iris detection may comprise identifying an approximate iris location and searching for iris detection points in the vicinity of the rough iris location. The objective of these detection points is to find edges of the iris which can be a good feature to estimate the shape of the iris. However, eyelids often cover the top and bottom part of the iris. Searching for iris detection points in these regions often results in detecting the edge of the eyelid instead of the edge of the iris because the iris edge is not visible in the image (see for example Figure 10 showing an iris outline ellipse (circle) 10114).

The second example iris detection method can advantageously provide a confidence score which accounts for the potential occlusion of the iris by eyelids in certain regions of the image.

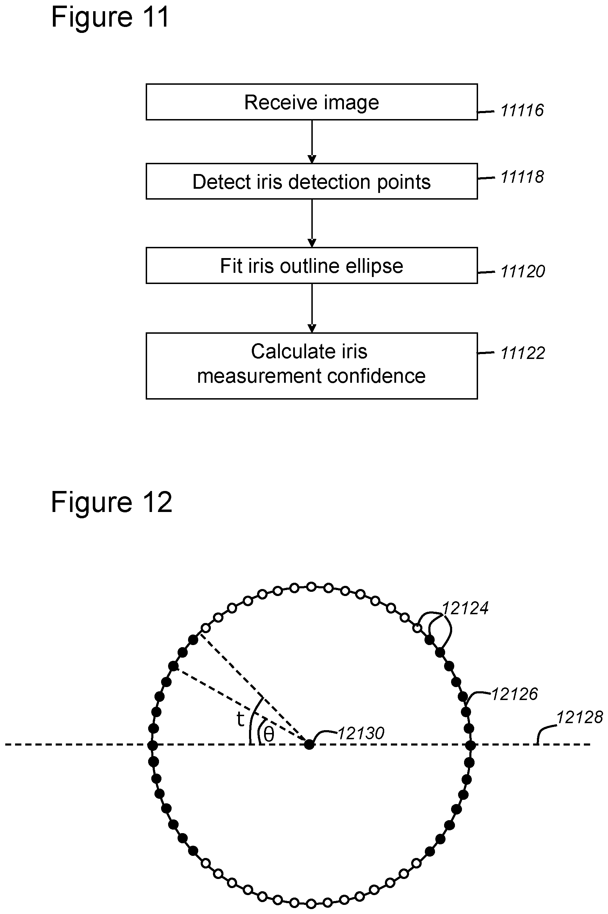

Figure 11 illustrates the second example iris detection method according to an embodiment of the present disclosure.

A first step 11116 comprises receiving an image of an eye of a user.

A second step 11118 comprises detecting a plurality of iris detection points of the iris in the image. Detecting the plurality of iris detection points may comprise estimating an approximate iris outline (e.g., a circle with a centre and radius based on the pupil centre and radius) and then searching for iris detection points in the vicinity of the approximate iris outline using edge detection or other known image processing techniques.

A third step 11120 comprises fitting an iris outline ellipse using the plurality of iris detection points. Fitting an ellipse provides the greatest flexibility. In some examples the iris outline ellipse may comprise a circle (i.e., an ellipse with equal half-axes). In some examples, an ellipse ratio of the iris outline ellipse may be constrained using the first example iris detection method.

A fourth step 11122 comprises calculating a measurement confidence by combining a deviation of each of the plurality of iris detection points from the fitted iris outline ellipse. Each deviation is weighted with a weighting based on an angle between: (i) a vector from the centre of the iris outline ellipse to the iris detection point; and (ii) a horizontal axis of the eye.

The second example iris detection method can advantageously reduce or discard the impact on the confidence score of detection points at angles more likely to include an eyelid occlusion. Such detection points may still be used for fitting the iris outline ellipse and only their influence on the measurement confidence is reduced.

In some examples, the weightings for each iris detection point may comprise: (i) a weighting of 1 if the angle is less than an angular threshold; and (ii) a weighting of 0 if the angle is greater than or equal to the angular threshold. In this way, detection points in an angular range corresponding to potential eyelid occlusion regions are eliminated from the calculation of the measurement confidence in a binary fashion.

Figure 12 schematically illustrates such a binary approach. The plurality of detection points 12124 are situated proximal to the fitted iris ellipse outline 12126. Each detection point 12124 subtends an angle, $\theta$, with the horizontal axis 12128 of the eye. The horizontal axis 12128 of the eye may correspond to the line connecting the canthi of the eye or may correspond to a vector from the centre of a first eye of the user to a second eye of the user. The deviation, $\Delta$, of each of the plurality of detection points 12124 from the iris outline ellipse 12126 may contribute to the confidence metric calculation if a magnitude of the corresponding subtended angle, $\theta$, is less than the angular threshold, t (these detection points 12124 are illustrated as solid circles). Conversely, the deviation of each of the plurality of detection points 12124 from the iris outline ellipse 12126 do not contribute to the confidence metric calculation if a magnitude of the corresponding subtended angle, $\theta$, is greater than or equal to the angular threshold, t (these detection points 12124 are illustrated as open circles). This binary weighted approach of calculating the measurement confidence may be written as:

$$confidence = \sum_i w(\theta_i) \cdot \Delta_i \qquad (4)$$

where

$w(\theta_i)$ = 1 *for* $i \leq t$
$w(\theta_i)$ = 0 *for* $i > t$

where the index, i, corresponds to the plurality of detection points used for fitting the iris outline ellipse and $w(\theta_i)$ corresponds to the weighting of each detection point as a function of the subtended angle, $\theta_i$. The subtended angle, $\theta_i$, can be calculated by simple trigonometry between the iris detection point, i, and the estimated centre 12130 of the iris outline ellipse 12126.

In other examples of the second example iris detection method, the weightings for each iris detection point may be inversely proportional to the magnitude of the subtended angle, $\theta$. In this way, the impact of detection points at risk of eyelid occlusion is reduced in a gradual manner. The inverse proportionality may comprise an inverse square relationship or other non-linear inverse relationship such that the contribution of detection point deviations to the confidence score drops off more rapidly for larger angles.

In some examples, the weightings may comprise dynamic weightings that can account for dynamic variation in the coverage of the iris from the eyelid, for example due to blinking or fatigue.

In some examples, the weightings may be defined by statistics, such as a personal calibration to account for the personal nature of eyelid occlusion from subject to subject.

The second example iris detection method may be combined with the first iris detection method or any of the eye gaze tracking methods disclosed herein. The second iris detection method may also be performed independently for other iris detection applications.

Throughout the present specification, the descriptors relating to relative orientation and position, such as "horizontal", "vertical", "top", "bottom" and "side", are used in the sense of the orientation of the eye, eye model or eye tracking system as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

**Claims**

1. A method for eye gaze tracking, the method comprising:

   receiving an image of an eye of a user and a corneal centre of the eye associated with the image;
   detecting a pupil position of the eye from the image;
   detecting an iris position of the eye from the image;
   determining the gaze axis of the eye based on the corneal centre, an iris centre of the iris position and a pupil centre of the pupil position.

2. The method of claim 1, wherein determining the gaze axis of the eye based on the corneal centre, the iris centre and the pupil centre comprises:

   determining a pupillary axis of the eye based on the corneal centre and the pupil centre;
   determining the gaze axis of the eye by transforming the pupillary axis with a transformation mapping; and
   updating the transformation mapping of the pupillary axis to the gaze axis based on the iris centre and the pupil centre.

3. The method of claim 2, wherein updating the transformation mapping comprises:

   calculating a pupil-iris offset as a difference between the pupil centre and the iris centre for the image; and
   updating the transformation mapping based on the pupil-iris offset for the image.

4. The method of claim 3, wherein updating the transformation mapping based on the pupil-iris offset for the image comprises:
   calculating the transformation mapping based on a combination of the pupil-iris offset for the image and pupil-iris offsets for one or more previous images.

5. The method of any of claims 2 to 4, wherein the transformation mapping comprises:

   a pupillary-optical transformation mapping for transforming the pupillary axis to an optical axis of the eye; and
   a fixed geometrical relationship between the optical axis and the gaze axis.

6. The method of claim 5, further comprising, during a calibration process:

   receiving a plurality of calibration images of the eye of the user and a plurality of corneal centres, each associated with a corresponding calibration image, wherein each calibration image has a known gaze axis;
   for each calibration image:

      detecting a pupil position of the eye; and

determining a pupillary axis of the eye based on the corneal centre and a pupil centre of the pupil position;
detecting an iris position of the eye;
determining an optical axis of the eye based on an iris centre of the iris position;

determining an initial value of the transformation mapping based on the relationship between the pupillary axis and the known gaze axis for each calibration image; and
determining the fixed geometrical relationship between the optical axis and the gaze axis based on the optical axis and the known gaze axis for each calibration image.

7. The method of any of claims 2 to 6, wherein updating the transformation mapping comprises updating the transformation mapping if a measurement confidence of the detected iris position exceeds an iris confidence threshold.

8. The method of any preceding claim, comprising determining the iris position with an associated measurement confidence, wherein determining the gaze axis of the eye based on the corneal centre, the iris centre and the pupil centre comprises:

calculating a first gaze value based on the iris centre;
calculating a second gaze value based on a pupillary axis through the corneal centre and the pupil centre and a pupil radius determined from the image; and
determining the gaze axis as a weighted combination of the first gaze value and the second gaze value, wherein a weighting of the first gaze value and the second gaze value is based on the measurement confidence.

9. The method of claim 8, comprising determining the measurement confidence based on one or more of:

an iris detection rate of a fixed number of previous images;
a standard deviation of an iris radius of the detected iris position of a fixed number of previous images;
a covariance matrix of a filter for mapping the iris centre to the pupil centre; and
a fitting metric based on the deviation of a plurality of iris detection points from a fitted iris outline ellipse.

10. The method of any of claim 8 or claim 9, further comprising, during a calibration process:

receiving a plurality of calibration images of the eye of the user;
for each calibration image, detecting an iris position of the eye;
calculating an iris detection rate based on whether iris detection was successful for each calibration image;
setting a gaze determination algorithm to a pupil-only based gaze determination process if the iris detection rate is less than a detection rate threshold; and
setting a gaze determination algorithm to a pupil- and iris-based gaze determination process if the iris detection rate is greater than or equal to the detection rate threshold.

11. The method of any preceding claim, wherein detecting the iris position comprises:

detecting a plurality of iris detection points of the iris in the image; and
fitting an iris outline ellipse using the plurality of iris detection points.

12. The method of claim 11, comprising:

estimating an angle between:

a camera-eye vector spanning from a camera which captured the image to the pupil centre; and
the pupillary axis or the optical axis;

setting an ellipse ratio based on the angle; and
fitting the iris outline ellipse using the ellipse ratio.

13. The method of claim 11 or claim 12, further comprising:
calculating a detection confidence of the iris position based on a deviation of each of the plurality of iris detection points from the fitted iris outline ellipse, wherein the deviation of each iris detection point is weighted based on an angle between:

a vector from the centre of the iris outline ellipse to iris detection point; and
a horizontal axis of the eye.

14. A method of calibrating an eye tracking system, the method comprising the steps of:

receiving a plurality of calibration images of the eye of the user;
for each calibration image, detecting an iris position of the eye with an associated detection confidence;
calculating an iris detection rate based on the associated detection confidence for the calibration images;
setting a gaze determination algorithm to a pupil-only based gaze determination process if the iris detection rate is less than a detection rate threshold; and
setting a gaze determination algorithm to a pupil- and iris-based gaze determination process if the iris detection rate is greater than or equal to the detection rate threshold.

15. A method of iris detection, the method comprising:

receiving an image of an eye of a user;
detecting a plurality of iris detection points of the iris in the image;
fitting an iris outline ellipse using the plurality of iris detection points;
calculating a detection confidence by combining a deviation of each of the plurality of iris detection points from the fitted iris outline ellipse, wherein each deviation is weighted with a weighting based on an angle between:

a vector from the centre of the iris outline ellipse to the iris detection point; and
a horizontal axis of the eye.

16. The method of claim 15, wherein the weightings of each iris point comprise:

a weighting of 1 if the angle is less than an angular threshold;
a weighting of 0 if the angle is greater than the angular threshold.

17. The method of claim 15, wherein

the weightings are inversely proportional to a magnitude of the angle, and/or
wherein the weightings comprise personalised weightings for the user and the method further comprises determining the personalised weightings during a user calibration process.

18. An eye tracking system comprising one or more processors configured to perform the method of any preceding claim.

19. A computer readable medium comprising instructions which, when executed by one or more processors, cause the one or more processors to perform the method of any of claims 1 to 17.

# Figure 1

# Figure 2

## Figure 3

## Figure 4

```
┌─────────────────────────────┐
│      Receive image of       │──── 444
│ user's eye and corneal centre│
└─────────────────────────────┘
              │
              ▼
┌─────────────────────────────┐
│     Detect Pupil Position   │──── 446
└─────────────────────────────┘
              │
              ▼
┌─────────────────────────────┐
│   Determine pupillary axis  │──── 448
└─────────────────────────────┘
              │
              ▼
┌─────────────────────────────┐
│     Detect iris position    │──── 450
└─────────────────────────────┘
              │
              ▼
┌─────────────────────────────┐
│     Determine gaze axis     │──── 452
└─────────────────────────────┘
```

# Figure 5

```
┌─────────────────────────────┐
│  Receive plurality of calibration  │ ── 558
│   images and corneal centres   │
└─────────────────────────────┘
              │
              ▼
┌─────────────────────────────┐
│      Detect pupil position      │ ── 560
└─────────────────────────────┘
              │
              ▼
┌─────────────────────────────┐
│     Determine pupillary axis     │ ── 562
└─────────────────────────────┘
              │
              ▼
┌─────────────────────────────┐
│       Detect iris position       │ ── 564
└─────────────────────────────┘
              │
              ▼
┌─────────────────────────────┐
│      Determine optical axis      │ ── 566
└─────────────────────────────┘
              │
              ▼
┌─────────────────────────────┐
│      Determine $A \cdot B_t$       │ ── 568
└─────────────────────────────┘
              │
              ▼
┌─────────────────────────────┐
│        Determine $A$         │ ── 570
└─────────────────────────────┘
```

# Figure 6

676

674

$I_{t-n}$   $I_{t-3}$   $I_{t-2}$   $I_{t-1}$   $I_t$

678

$P_t$
$PO_t$

$V_t = A \cdot B_T \cdot P_t$

682

680

$PO_{t-n}$   $PO_{t-3}$   $PO_{t-2}$   $PO_{t-1}$   $PO_t$

# Figure 7

784

Pupils

Irises

Advanced filter

Fallback gaze estimator

Confidence

786

Pupil offset vector

Iris gaze estimator

Gaze combiner

Gaze

790

788

## Figure 8

```
┌─────────────────────────┐
│   Receive plurality of   │── 892
│   calibration images     │
└─────────────────────────┘
            │
            ▼
┌─────────────────────────┐
│ Detect iris position for each image │── 894
└─────────────────────────┘
            │
            ▼
┌─────────────────────────┐
│  Calculate iris detection rate  │── 896
└─────────────────────────┘
            │
            ▼
          898
      ╱─────────╲
     ╱  Rate <   ╲
     ╲  Threshold ╱
      ╲─────────╱
     │           │
     ▼           ▼
```

┌───────────────────────────┐          ┌───────────────────────────┐
│ Set pupil only gaze method │─8100     │ Set pupil and iris gaze method │─8102
└───────────────────────────┘          └───────────────────────────┘

# Figure 9

# Figure 10

# Figure 11

```
┌─────────────────────────────────┐
│         Receive image           │──── 11116
└─────────────────────────────────┘
                │
                ▼
┌─────────────────────────────────┐
│    Detect iris detection points │──── 11118
└─────────────────────────────────┘
                │
                ▼
┌─────────────────────────────────┐
│      Fit iris outline ellipse   │──── 11120
└─────────────────────────────────┘
                │
                ▼
┌─────────────────────────────────┐
│         Calculate iris          │──── 11122
│   measurement confidence        │
└─────────────────────────────────┘
```

# Figure 12

Europäisches Patentamt

European Patent Office

Office européen des brevets

## EUROPEAN SEARCH REPORT

**Application Number**

EP 24 17 2821

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/156100 A1 (ROUGEAUX SEBASTIAN [AU] ET AL) 23 May 2019 (2019-05-23) | 1,11,18, 19 | INV. G06F3/01 |
| Y | * abstract; figures 1-9 * | 12,13 | G06V40/18 |
| A | * paragraphs [0009], [0031], [0059], [0071], [0088], [0094] - [0104], [0116] * | 2-10,14 | |
| | ----- | | |
| X | JP 2017 162233 A (ALPS ELECTRIC CO LTD) 14 September 2017 (2017-09-14) * abstract; figures 1-3 * * paragraphs [0027] - [0042] * | 1,18,19 | |
| | ----- | | |
| X | US 2006/098867 A1 (GALLAGHER ANDREW C [US]) 11 May 2006 (2006-05-11) | 15-19 | |
| Y | * abstract; figures 1-17 * * paragraphs [0017], [0030], [0036], [0059], [0085] - [0088], [0093] - [0095] * | 13 | |
| | ----- | | |
| Y | US 2020/364441 A1 (O'SULLIVAN BRIAN [IE] ET AL) 19 November 2020 (2020-11-19) * abstract; figures 1-14 * * paragraphs [0071], [0072], [0114], [0129] - [0136], [0151] - [0154] * | 12 | **TECHNICAL FIELDS SEARCHED (IPC)** G06F G06V A61B G02B |
| | ----- | | |

The present search report has been drawn up for all claims

| Place of search | Date of completion of the search | Examiner |
|---|---|---|
| Munich | 11 September 2024 | Köhn, Andreas |

EPO FORM 1503 03.82 (P04C01)

EP 4 459 433 A1

## ANNEX TO THE EUROPEAN SEARCH REPORT
## ON EUROPEAN PATENT APPLICATION NO.

EP 24 17 2821

11-09-2024

| Patent document cited in search report | | Publication date | Patent family member(s) | | Publication date |
|---|---|---|---|---|---|
| US 2019156100 | A1 | 23-05-2019 | CN | 109690553 A | 26-04-2019 |
| | | | EP | 3479293 A1 | 08-05-2019 |
| | | | JP | 2019519859 A | 11-07-2019 |
| | | | US | 2019156100 A1 | 23-05-2019 |
| | | | WO | 2018000020 A1 | 04-01-2018 |
| JP 2017162233 | A | 14-09-2017 | NONE | | |
| US 2006098867 | A1 | 11-05-2006 | EP | 1810245 A1 | 25-07-2007 |
| | | | JP | 4954081 B2 | 13-06-2012 |
| | | | JP | 2008520039 A | 12-06-2008 |
| | | | US | 2006098867 A1 | 11-05-2006 |
| | | | WO | 2006052477 A1 | 18-05-2006 |
| US 2020364441 | A1 | 19-11-2020 | US | 2020364441 A1 | 19-11-2020 |
| | | | US | 2021150181 A1 | 20-05-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9041787 B

- WO 2019158709 A